# EUROPEAN PATENT APPLICATION

(11) **EP 1 398 919 A1**
(43) Date of publication of application: **17.03.2004**
(21) Application number: 02292227.2
(22) Date of filing: 12.09.2002
(51) Int. Cl.: H04L 12/46, H04L 12/56, H04L 12/28

(54) **Method for parent election of a wireless transparent bridge in a "parent-child" hierarchical network**

(71) Applicant: Thomson Licensing S.A., 92100 Boulogne-Billancourt (FR)
(72) Inventor: Perrot, Sébastien, 35700 Rennes (FR); Straub, Gilles, 35690 Acigné (FR); Bürklin, Helmut, 35000 Rennes (FR)
(74) Representative: Kerber, Thierry

(57) **Abstract**

The application discloses a method for parent election of a wireless transparent bridge in a "parent-child" hierarchical network comprising the steps of:
- defining for each bridge device, which interconnects at least two sub-networks, a number of ports to which other wireless devices could be connected, such ports being called "virtual" ports;
- electing, as parent, the bridge device which has free "virtual" ports, allowing for a wireless device (wbox) to be connected to it, so that devices, that are already connected in the network, see only minimal topology changes. In this way data traffic is kept to a minimum.

## Description

### 1. Technical background

Document [6] defines a method to connect more than two transparent bridges. It defines a specific role for one of the bridges, which is called the parent. According to [6] only a single 'wbox' (i.e. de device interfacing a sub-network to the wireless sub-network) will be the 'parent', all other wboxes act as children. Note that in the particular simulated topology of document [6], there is a link from the parent to each of its children, but there is no link simulated between children. This means, that the parent needs to simulate as many virtual ports as there are children connected to it, but children need to simulate only a single virtual port.

According to the embodiment of document [1], the number of ports in a 1394 device is limited to 16. This means that a 1394 device may be connected to up 16 to devices.
Document [7] defines the modified PHY required to be a transparent bridge. It defines the concept of virtual port, which has no physical port connection. It is the port used to connect the bridge.

Simulation of virtual ports implies some hardware support, as detailed in [7]. ln a wireless network not all wboxes may implement sufficient hardware to become parent, in some cases even none of the wboxes may have sufficient capacity to become parent of all other boxes. For this reason a procedure is needed to select a suitable wbox as parent, and to decide which wboxes will have to be rejected to connect in case the number of virtual ports is not sufficient.

A transparent bridge is connected to 1394 devices - called hereafter a wired connection - and to other transparent bridges - called a wireless connection. Each connection is applied to a port of the device. In the case of a transparent bridge, wired and wireless connections split the 16 ports.

### 2. Technical problem

In the current definition the port assignment is not adequate.
A bridge may have 15 port attached to 1394 devices, and one port attached to another bridge. This bridge may also be elected as the parent. And the bridge is not able to connect more than one bridge.
This other bridge could have more ports available, and could allow the connection of other bridges. It shall be elected as the parent.

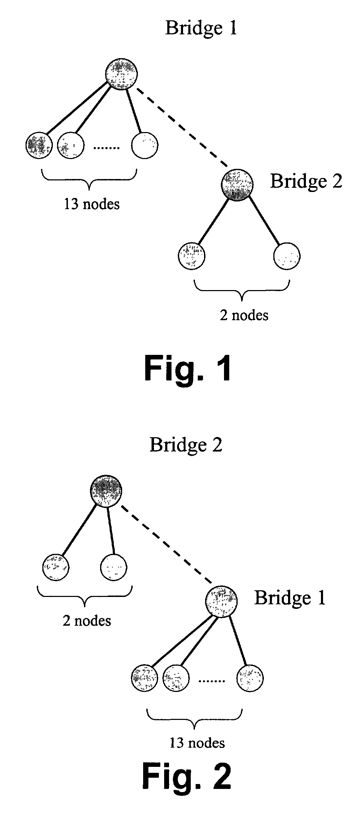

An example of the problem is illustrated in figure1. Bridge 1 and bridge 2 are root on their bus. Bridge 1 does not have ports available any more. Bridge 2 has 11 ports available. As bridge 1 is parent, it is not possible to connect another bridge.

As illustrated in figure 2, with a possibility to elect a new parent based on the port criterion, is it now possible to connect other bridges. Bridge 2 becomes the parent and has ports available.

### 3. Invention summary

If a new wbox is added to the network, then it should be connected to one of the 'free' ports or the incumbent parent, if ever possible. This allows that connected devices see only a minimum change in the topology (adding a new branch), which may minimize bus traffic (devices do not need to team again the identity of all connected devices if they adopt a procedure similar to the one described in [5]). If it is not possible to keep the old parent, but it is possible to build a network by electing a different parent, then this shall be done. If it not possible to find an allowed configuration, then the added wbox shall not be connected, but the former configuration shall be kept. The detailed procedure is described now.
(See below later in this document for a possibility to alert the user about the reasons of the failure of a connection)

The number of ports allocated to the wired and wireless side may be fixed or configurable.

### 4. Invention description

Figure 1 is a diagram of a network comprising two wireless boxes, before application of the method according to the embodiment;
Figure 2 is a diagram of the network of figure 1, after application of the method.

An IEEE 1394 device may have up to 16 ports available. When it is connected to another 1394 devices, a port is set to active.
ln a transparent bridge, a port may be connected not only to a 1394 device, but to another bridge. The number of ports available may then be split between wired and wireless devices.
The modified PHY defined in document [7] is limited to a single virtual port. The present embodiment assumes that the modified PHY is able to handle more than one virtual port.

### 4.1. Port management

The way the reservation of ports is done is out of the scope of this application.

### 4.1.1. No management

When a device is connected to the bridge a port is set to active - whether it is a 1394 device or a bridge. A port may be allocated to a wired or a wireless device.
No prioritization is done between devices.

### 4.1.2. Prioritization

A wired connection may not be deactivated by the bridge. But a wireless connection may be deactivated. It is then possible for a parent bridge to disconnect a bridge to allow the connection of a wired device.
But it is not possible for the parent to disconnect a wired device, to allow the connection of a bridge.

A prioritization may then be considered, giving higher priority for wired devices.

### 4.1.3. Number of ports is fixed

The number of wired ports and wireless ports is fixed, vendor dependent. The number may be dependent on the bridge device itself. lf the device is to be connected to many wired devices, the number of wired ports should be higher. lf it is planned to be a parent and not connected to many wired devices, the number of wireless ports should be higher.

### 4.1.4. Number of ports is configurable

Configuration by the user.
If the user intends to use the device as a parent, connecting several bridges, it shall allocate several ports for wireless.
If the user intends to connect the device to several wired devices, it shall allocate several ports for wired.

### 4.2. Parent election

The following applies when the number of virtual ports on wboxes is different. If the number is the same on each wboxes, election based on the number is a nonsense.

### 4.2.1. Adding a wbox to an existing wireless network

### 4.2.1.1. Summary

If a new wbox is added to the network, then it should be connected to one of the 'free' ports or the incumbent parent, if ever possible. This will allow that connected devices will see only a minimum change in the topology (adding a new branch), which may minimize bus traffic (devices will not need to learn again the identity of all connected devices if they adopt a procedure similar to the one described in [5]). If it is not possible to keep the old parent, but it is possible to build a network by electing a different parent, then this shall be done. If it not possible to find an allowed configuration, then the added wbox shall not be connected, but the former configuration shall be kept. The detailed procedure will be described now.
(See below later in this document for a possibility to alert the user about the reasons of the failure of connection.)

### 4.2.1.2. Association

When a new wbox joins the wireless network, a rlc-association procedure is performed towards the Central Controller as described in [6]. Wboxes now can exchange information; this allows the joining wbox to detect which of the other boxes is currently parent.

### 4.2.1.3. Exchange with incumbent parent

The new wbox performs a bus reset on its local cluster (may be done before or after the association). As indicated in document [6], preferably, the wbox tries to become root on its local bus as much as possible. It may be done it by generating several bus reset trying to force the root. In general, when a bus reset occurs on a bus where a wbox is not root, the wbox shall try to become root only in the case the previous root left the bus. ln the case the previous root is still on the bus, the wbox does not try to become root. This is not necessary because the node that is root would surely prevent again the wbox from being root. And this avoids bus reset storms.
It then communicates to the incumbent parent information about its capabilities (i.e. the number of virtual ports that it can implement), and about the local configuration (topology data including the number of devices and the fact if it has become root, or not).

### 4.2.1.4. Decision process

The incumbent parent processes this information together with information it holds concerning the current configuration of the wireless cloud and the connected buses.
If the new wbox is root, the incumbent parent still has a virtual port available to connect it, and the resulting number of devices does not exceed 63, then it shall be connected (see 4.2.1.5). According to a variant embodiment, the hop count of the new configuration must not exceed 16.
If the resulting number of devices would exceed 63, then the new w box shall not be connected, and the incumbent parent shall try to stay parent. A bus-reset procedure may not be necessary.
lf the new wbox is not root on its bus, and has sufficient capability, the incumbent parent checks if itself is root on its bus. If this is the case, the new wbox shall become parent. lf not, the incumbent parent shall initiate a bus-reset procedure in order to become root. lf it does not succeed, the new wbox shall not be connected.
lf the incumbent parent has not enough virtual ports, and if another wbox (including the newcomer) has a sufficient number of virtual ports, than it will be checked if this wbox may become parent. lf all wboxes are root, or there is a single wbox that is not root, and this wbox has sufficient capabilities, then it shall become the new parent. lf this is not the case (i.e. the incumbent parent is not able to become root), then the new wbox shall not be connected.

### 4.2.1.5. Continuing the connection procedure

The rest of the connection procedure follows the procedure described in [6].

### 4.2.2. Bus reset

If the parent is root and a bus reset occurs on a bus where the child becomes no longer root, the child shall become the new parent if it has a sufficient number of virtual ports.
If the parent is not root and a bus reset occurs on a bus where the child becomes no longer root, the child is disconnected.
lf the parent is root and bus resets occur on more than 1 bus at the same time where the child become no longer root, one of the child shall become the new parent if it has a sufficient number of virtual ports and the other child shall be disconnected.
lf the parent is not root and bus resets occur on more than 1 bus at the same time where the child become no longer root, childs are disconnected.

### 4.2.3. lnitial configuration of a wireless network

### 4.2.3.1. Summary

When a wireless network is initially set up, there is no incumbent parent. So a distributed procedure is proposed here.
(Another option would be to use the same procedure as described under 4.2.1, but replacing the incumbent parent by the 'most capable' wbox as defined in.2.2.4)

### 4.2.3.2. Association

When a new wireless network is set up (or optionally when a new wbox joins the network), a rlc-association procedure is performed towards the Central Controller as described in [6]. Wboxes now can exchange information.

### 4.2.3.3. Information exchange

All wboxes perform a bus reset on their local cluster (may be done before or after the association) and try to become root on their local bus (not necessary if they are already root). They then communicate to all associated wboxes information about their capabilities (i.e. the number of virtual ports that it can implement), and about the local configuration (topology data including the number of devices and the fact if it has become root, or not).

### 4.2.3.4. Decision process

Each box processes this information together with information it holds concerning the current configuration of the wireless cloud and the connected buses.
The 'most capable' wbox shall be the one that supports the highest number of virtual ports. If several wboxes support the same number, there shall be a procedure that allows to all wboxes to agree on the ranking, as e.g. using a unique identifier built into the boxes.
lf only a single wbox is not root, it shall become parent.
lf several wboxes are not root, the most capable shall become parent.
If all wboxes are root, the most capable shall become parent.
It shall be up to the parent to decide which other wboxes it connects to its wireless ports. It shall do this by respecting the restriction concerning the resulting number of devices (not to exceed 63), and according to the variant embodiment, the condition that the hop count of the new configuration must not exceed 16.

### 4.2.3.5. Continuing the connection procedure

The rest of the connection procedure follows the procedure described in [6].

### 4.2.4. Communicating the result

lt is proposed to add inside each wbox an information store (e.g. a register in the configuration ROM structure as defined by [4]) that holds local information about the outcome of the last configuration/association procedure, as seen by this wbox. The coding of this information store should be standardised between wboxes, so that an intelligent device on the wired bus be able to read this information and give to the user some hint about the failure of configuration (e.g. this wbox had not sufficient number of virtual ports to connect all other boxes, or wbox failed to become root and was not connected, or wbox failed to associate). A second information store shall be defined, which holds global information about the outcome of the last configuration/association procedure, as seen by the parent. This information store shall be written through exchange of rlc-messages, since the information exchange shall also be possible between the parent and the not connected boxes.

### References

1. IEEE Std 1394-1995 High Performance Serial Bus
2. Patent application "Method for connecting an IEEE1394 remote device to a cluster of IEEE1394 devices through a wireless link" (EP 1199840, filed April 24, 2002)
3. Patent application "Method for linking several communication busses using wireless links" (PCT WO 02/37765, filed October 18, 2001)
4. IEEE P1212 Draft 1.2, Control and Status Registers (CSR) Architecture for microcomputer buses
5. Patent application "Method and device for identifying devices in a communication network" (EP 0961453, filed May 21, 1999)
6. Patent application "Method for managing a communication network comprising wireless links with more than two wireless devices" (PCT application EP 02/05710, filed 24 May 2002)
7. Patent application "Interface circuit" (PCT application EP 02/04286, filed April 18, 2002)

### Port allocation in a transparent bridge:

A subset of ports is pre-allocated to the connection of wired and wireless devices.

### Parent election procedure:

The number of possible wireless connection is improved.

## Claims

1. Method for parent election in a transparent bridge comprising the steps of:
- defining for each bridge device a number of ports to which other wireless devices may be connected, such ports being called 'virtual' ports;
- electing a bridge device as parent as a function of the number of virtual ports.

2. Method according to claim 1, further comprising the step of limiting the sum of the number of virtual ports and of the number of physical ports to a predefined number.
